Europäisches Patentamt

European Patent Office

Office européen des brevets

(19)

(11) Veröffentlichungsnummer: **0 280 753**
**B1**

(12) # EUROPÄISCHE PATENTSCHRIFT

(45) Veröffentlichungstag der Patentschrift:
**12.12.90**

(21) Anmeldenummer: **87103120.9**

(22) Anmeldetag: **05.03.87**

(51) Int. Cl.⁵: **C04B 28/02**, C04B 18/04,
B09B 3/00, C02F 11/00
// (C04B28/02, 18:04, 18:08,
24:26)

(54) **Verfahren zur Beseitigung von schadstoffhaltigen Haufwerken.**

(43) Veröffentlichungstag der Anmeldung:
**07.09.88 Patentblatt 88/36**

(45) Bekanntmachung des Hinweises auf die Patenterteilung:
**12.12.90 Patentblatt 90/50**

(84) Benannte Vertragsstaaten:
**AT BE CH DE ES FR GB GR IT LI LU NL SE**

(56) Entgegenhaltungen:
**EP-A- 0 168 638**
**DE-A- 3 324 671**
**FR-A- 1 127 198**
**FR-A- 2 512 440**
**US-A- 4 353 749**

(73) Patentinhaber: **Fritsch, Georg, Dr., Kettelerstrasse 16,
D-4620 Castrop-Rauxel(DE)**

(72) Erfinder: **Fritsch, Georg, Dr., Kettelerstrasse 16,
D-4620 Castrop-Rauxel(DE)**

(74) Vertreter: **Herrmann-Trentepohl, Werner, Dipl.-Ing. et al,
Schaeferstrasse 18, D-4690 Herne 1(DE)**

**Beschreibung**

Die Erfindung betrifft ein Verfahren zur Beseitigung von schadstoffhaltigen Haufwerken gemäß dem Oberbegriff des Patentanspruchs 1.

Ein derartiges Verfahren ist beispielsweise aus der EP-A-168 638 bekannt. Aus dieser Druckschrift ist die Herstellung deponierbarer Produkte aus umweltgefährdenden Salzgemischen bekannt. Dazu werden letztere mit hydraulischen Bindemitteln, ggf. Zusatzstoffen kompaktiert und mit einer wasserdichten Umhüllung versehen. Dies geschieht dadurch, daß ein Zement-Salzgemisch trocken vorgemischt wird und dieses mit einer wässrigen Kunststoffdispersion versetzt wird. Allerdings reichen diese Maßnahmen beim vorbekannten Verfahren noch nicht aus. Daher werden die entstandenen Formkörper danach mit einer 0,1 bis 5 mm dicken Bitumenschicht versehen und in eine Zementmatrix eingebettet. Das vorbekannte Verfahren eignet sich in besonderer Weise zur Herstellung deponierbarer Produkte aus hohe Salzanteile enthaltenden umweltgefährdenden Abfallprodukten. Hierzu ist der Einsatz eines hohen Anteils an Zement, insbesondere Portlandzement notwendig. Das Verfahren ist somit lediglich nur für spezielle Abfallstoffe geeignet, darüberhinaus aufwendig und durch den Einsatz des Portlandzementes auch kostspielig.

Ein weiteres Verfahren zur Entsorgung eines industriellen Klärschlammes unter Zusatz von organischen und/oder anorganischen Additiven ist aus der DE-OS 3 324 671 bekannt. Die Klärschlämme fallen insbesondere bei der Dispersionsfarbenproduktion sowie bei der Kunstharz-Putzproduktion an. Die entsorgten Klärschlämme werden mit Hilfe des vorbekannten Verfahrens zu Bauklebern bzw. Spachtel-/Ausgleichsmassen verarbeitet. Auch dieses Verfahren ist auf einen engen Anwendungsbereich beschränkt und durch den Einsatz hoher Kunststoffdispersionsanteile auch kostspielig.

Der Erfindung liegt daher die Aufgabe zugrunde, das als bekannt vorausgesetzte Verfahren so zu führen, daß damit auf wirtschaftlich vertretbare Weise Haufwerke entsorgt werden können, welche problematische Schadstoffe in bedenklicher Konzentration enthalten.

Diese Aufgabe löst die Erfindung mit den Merkmalen des Patentanspruchs 1. Zweckmäßige Ausführungsformen der Erfindung sind Gegenstand der Unteransprüche.

Nach dem erfindungsgemäßen Verfahren lassen sich Haufwerke unterschiedlicher stofflicher Zusammensetzung umweltverträglich beseitigen, denen ein mehr oder weniger großer Anteil an Stoffen gemeinsam ist, die bei der Endlagerung des unbehandelten Haufwerkes von Atmosphärilien oder der Bodenfeuchtigkeit herausgelöst und daher in einem Eluat auftauchen würden. Dabei handelt es sich um Stoffe, Stoffgemische und Verbindungen, welche Beeinträchtigungen oder Vergiftungen insbesondere des Grund- und Oberflächenwassers hervorrufen können. Diese Schadstoffe können auch organischer Natur sein, wenn sie sich in Faulprozessen umsetzen; das gilt z. B. für schlammige Haufwerke, die bei der Aufbereitung von Grundstoffen für die Lebensmittelindustrie erhalten werden oder in der Fahrzeugindustrie mit mehr oder weniger großen Anteilen an Kunststoffen anfallen. Aber auch lösliche Salze bilden Schadstoffe, z. B. in Filteraschen von Müllverbrennungsanlagen, wo sie in erheblichen Mengen auftreten. Ferner sind öl- und ölhaltige Substanzen wie z. B. Öltanksedimentschlamm als Schadstoffe eines solchen Haufwerkes zu bezeichnen. In Betracht kommt auch Erdreich, das als sogenannte Altlast z. B. Kokereiabfälle in Form von Kohlenwasserstoffen, auch polyzyklische Aromate, enthält. Diese Aufzählung schadstoffhaltiger Haufwerke, welche nach dem erfindungsgemäßen Verfahren entsorgt werden, ist nicht vollständig, ergibt aber, daß hierfür vor allem Haufwerke in Betracht kommen, welche in mehr oder weniger großen Anteilen Schadstoffe enthalten, die als beton- oder zementschädlich in dem Sinne bezeichnet werden können, daß sie dem hydraulischen Erhärtungsprozeß entgegenwirken oder diesen sogar vereiteln.

Das Erhärten findet in dem erfindungsgemäßen Verfahren vorzugsweise durch Trocknen der angemachten hydraulischen Masse an der Luft statt. Hierbei kann die Masse beispielsweise auf Schlammbeeten ausgebracht und nach ihrem Erhärten aufgebrochen werden. Dadurch wird sie in eine Form überführt, in der sie deponiert oder einer nutzbringenden Verwendung z. B. als Baustoff zugeführt werden kann.

Erfindungsgemäß wird mit der vorbekannten hydraulischen Bindung der Schadstoffe eine ebenfalls vorbekannte organische Einhüllung der Schadstoffe kombiniert, die gelöst oder als suspendierte bzw. feste Partikel vorliegen können. Das geschieht durch die Kunststoffdispersion und deren durch das intensive Mischen bewirkte Verteilung in der Masse, die dann unverzüglich aus ihrer mörtelartigen Konsistenz in den Erhärtungsprozeß übergeht.

Es hat sich überraschend herausgestellt, daß die kombinierte hydraulisch-organische Bindung der Schadstoffe derart leistungsfähig ist, daß die breiige bis pastöse Masse selbst dann erhärtet, wenn ihr kein Zement zugegeben wird, sofern das Ausgangshaufwerk selbst oder eine ihm hinzugefügte stoffliche Komponente latenthydraulische Eigenschaften aufweist. Jedenfalls kann dann der Zementzusatz wesentlich verringert werden. Als hydraulisches Bindemittel kann Elektrofilterasche verwendet werden, deren latenthydraulische Eigenschaften unter entsprechender Reduzierung des Zementeinsatzes genützt werden. Das erfindungsgemäße Verfahren ist daher auch erfolgreich, wenn z. B. Zement überhaupt entfällt, weil bereits der Zusatz von Flugstaub aus Rauchgasreinigungsanlagen, d. h. von sogenannter Kraftwerksasche genügt.

Die Erfindung hat daher den Vorteil, daß zum einen mit Hilfe des Verfahrens mehrere Schadstoffe gleichzeitig beseitigt werden können, wobei einer dieser Schadstoffe die Funktion des teueren Zementes zumindest teilweise übernimmt.

Bei den filmbildenden Kunststoffen handelt es sich um solche Kunststoffe, wie sie beispielsweise in lösungsmittelfreien Anstrichmitteln bzw. -farben verwendet werden, wo sie die Funktion des Lösungsmittels übernehmen. Insbesondere kommen hierfür die im Patentanspruch 2 benannten Kunststoffe in Betracht. Gemeinsam ist ihnen die Eigenschaft der besonderen Filmbildung und die Durchlässigkeit ihres Films für Wasserdampf, die bei dem erfindungsgemäßen Verfahren für den hydraulischen Abbindeprozeß genutzt wird.

In der Ausführungsform des Patentanspruchs 3 wird mit dem erfindungsgemäßen Verfahren auf überraschende Weise die Entsorgung von Haufwerken ermöglicht, welche wasserlösliche Schadstoffe in hohen Anteilen aufweisen. Dazu gehören z. B. hoch aufgesalzene Flugaschen aus Müllverbrennungsanlagen, deren Deponie wegen der Grundwassergefährdung bislang nicht möglich war. Selbst reine Salze, die als Abfall- oder als Abraumsalze entstehen, wie z.B. das Glaubersalz, lassen sich auf die beschriebene Weise durch Verfestigung binden und immobilisieren. Da das Grundwasser vor einer zunehmenden Aufsalzung nachträglich geschützt werden muß, ist das erfindungsgemäße Verfahren von hohem Wert für den Grundwasserschutz.

Die Erfindung hat den Vorteil, daß sie der unbedenklichen Beseitigung schadstoffhaltiger Haufwerke neue Anwendungsbereiche erschließt, indem sie die Auswaschbarkeit von wasserlöslichen Salzen oder anderen Schadstoffen des Ausgangshaufwerkes aus dem nach dem Verfahren hergestellten Erzeugnis durch Niederschlagwasser oder Grundwasser zuverlässig verhindert, wodurch die Deponie ermöglicht oder das Erzeugnis als Baustoff weiterverwendet werden kann.

Im folgenden werden Ausführungsbeispiele der Erfindung beschrieben:

Beispiel 1

Sogenannter Venturischlamm fällt in der Fahrzeugindustrie an und enthält mehr oder weniger große Anteile von Kunststoff in der Trockenmasse. Ein solcher Venturischlamm mit 30 bis 25 % Kunststoff in der Trockenmasse wurde wie folgt verarbeitet:

40 – 60 Teile Venturischlamm, vorwiegend 52 Teile,
1,8 – 3,5″ einer ca. 50%-igen wässrigen Kunststoffdispersion aus Acrylester-Copolymerisat, vorwiegend 2 - 2,5 Teile,
30 – 70″ Flugstaub, vorwiegend 45 Teile,

wurden fünf Minuten intensiv in einem mit Wirbler und Kollergang ausgerüsteten Spezialmischer gemischt. Es entstand eine mörtelartig-breiige Masse, die zunehmend fester wurde und nach acht Tagen 0,8 N/qmm und nach 30 Tagen 1,21 N/qmm Druckfestigkeit aufweist.

Die verfestigte Masse gibt im Elutionsversuch nach DIN 383 414 (S4) keine Schwermetalle in Konzentrationen oberhalb der Forderung der Trinkwasserverordnung vom 28. Mai 1986 ab. Auch organische Verbindungen, die sich im Abfallschlamm befinden, so z.B. Methylenchlorid, werden sehr gut eingebunden. Im Eluat werden nur noch 0,45 Mikrogramm pro Liter festgestellt.

Beispiel 2

Als Ausgangshaufwerk dient ein Öltanksedimentschlamm. Die Mischung enthielt

230 – 360 Teile Öltanksedimentschlamm, vorwiegend 315 kg,
10 – 30″ einer ca. 50%-igen, wässrigen Kunststoffdispersion gem. Beispiel 1, vorwiegend 15 bis 20 kg,
610 – 760″ Flugstaub aus Steinkohlekraftwerken, vorwiegend 665 kg.

Der Flugstaub wurde den beiden anderen Komponenten zugesetzt. Die Mischung wurde dann ca. 4 Minuten intensiv wie im Beispiel 1 gemischt. Es entsteht ein dunkelgrauer Brei von zunehmend dickbreiiger Konsistenz. Diese Mischung erhärtet zunehmend und weist nach 14 Tagen 0,31 N/qmm und nach 34 Tagen 0, 61N/qmm Druckfestigkeit auf. Im Eluat nach DIN 38 414 (S4) waren keine polychlorierten Diphenyle nachweisbar (Nachweisgrenze: 0,001 mg/l), obwohl im Ausgangsschlamm 167 mg/kg enthalten sind.

Der Ölgehalt im Ausgangsschlamm beträgt 38,5% Im Eluat des Verfestigungsproduktes werden 0,23 mg/l Mineralölprodukte (H18) gefunden.

Beispiel 3

Das Ausgangshaufwerk war eine Altlastmasse mit kokereispezifischen Belastungen.
Gemischt wurden

ca. 30 – 40 Teile der teerhaltigen Altlast, vorwiegend 35 Teile,
mit 30 – 40 Teilen Rotschlamm, vorwiegend 35 Teile;
zugegeben wurden
10 – 20 Teile Flugstaub, vorwiegend 12 – 15 Teile
10 – 20 Teile hydraulischer Binder, vorwiegend 15 Teile,
sowie 1 – 3 Teile einer ca. 50%-igen wässrigen Kunststoffdispersion aus Acrylester-Copolymerisat, vorwiegend 2 Teile
und zwar angerührt in 5 – 6 Teilen Anmachwasser.

Ca. 3 bis 5 Minuten wurde intensiv mit dem Mischer nach Beispiel 1, der einen Wirbler und einen Kollergang aufweist, gemischt. Es entstand eine mörtelartige, dunkelbraune Masse, die alsbald erstarrt und aushärtet. Nach drei Tagen wird eine Druckfestigkeit von 2,0 N/qmm und 14 Tagen 4,06 N/qmm erreicht.

Obwohl im Ausgangsmaterial 173 g/kg polycyklische Aromate (PAK) enthalten sind, werden im Eluat nur 276 Nanogramm je Liter wiedergefunden. Wenn man berücksichtigt, daß im Trinkwasser 200 Nanogramm je Liter und in Deponien der Klasse 3 (Hausmülldeponien) 5000 mg/l zulässig sind, kann von einem sehr guten Bindevermögen gesprochen werden. Der Gehalt an Mineralölprodukten im Eluat liegt unterhalb der Nachweisgrenze (NG) von 0,1 mg/l.

Beispiel 4

Das Ausgangshaufwerk bestand aus einer Altlast mit Schwermetallverunreinigungen.

Mischt man 65 – 80 Teile Altlastmaterial, vorwiegend 75 Teile mit 2,1 – 3,9 Teilen an organischem Binder (Styrolcopolymerisat), vorwiegend 3,5 Teile gelöst in 8 Teilen Anmachwasser und gibt 4 – 10 Teile Flugstaub, vorwiegend 6 Teile und weitere 10 – 20 Teile hydraulischen Binder, vorwiegend 15 Teile zu und bearbeitet man diese Mischung im Mischaggregat nach Beispiel 1 fünf Minuten, so entsteht eine hellgrau-bräunliche Mörtelmasse, die alsbald erstarrt. Nach 20 Tagen werden 7,69 N/qmm und nach 38 Tagen 8,40 N/qmm Druckfestigkeit erreicht.

Diese Druckfestigkeit liegt in der Größenordnung von Ziegelsteinen (8 – 11 N/qmm).

Diese Masse ist zum Wiedereinbau an Ort und Stelle des kontaminierten Standortes geeignet, weil sie nach Verdichtung keinerlei Durchlässigkeit für Sicker- oder Niederschlagswasser aufweist und somit keine umweltbelastenden Schwermetalle an das Grundwasser abgeben kann.

Beispiel 5

Als schadstoffhaltiges Ausgangshaufwerk dient ein ölverunreinigtes Erdreich aus einer Altlast. Die Rezeptur wurde wie im Beispiel 4 vorgenommen.

Im Eluat der verfestigten Altlast ist der Anteil an xineralölprodukten kleiner als die Nachweisgrenze von 0,1 mg/l.

Beispiel 6

Als schadstoffhaltiges Haufwerk dient eine Flugasche mit hohem Salzgehalt aus einer Müllverbrennungsanlage.

Mischt man 100 Teile Flugstaub, die bis zu 24% leicht in Wasser lösliche Bestandteile enthält, in der Weise mit dem organischen Bindemittel, daß man zunächst letzteres in der notwendigen Wassermenge suspendiert und in diese Suspension den Flugstaub unter beständigem Rühren einrieseln läßt, so entsteht nach 3 bis 5 Minuten unter Erwärmung eine breiige, hellgraue Masse, die nach 10 bis 15 Minuten zu einer steinharten Masse erstarrt. Nach zwei Tagen weist diese bereits eine Druckfestigkeit von 4,33 N/qmm auf.

Das organische Bindemittel ist identisch mit den Beispielen 1 bis 3. Auf 912 kg Flugstaub kommt 464 l Wasser, in welchem 88 kg organischer Binder (AcrylesterCopolymerisat ca. 50% aber auch Styrol-Butadien-Copolymerisat ca. 47%) suspendiert sind.

Je nach Oberflächenausbildung verliert die verfestigte Masse in 14 Tagen ca. 4 bis 7,5% an Gewicht gelagert bei Raumtemperatur. Aus einer Menge von 75 g Verfestigungsprodukt werden nach Einhängen in destilliertes Wasser und Rühren nach 24 Stunden lediglich 3,3% lösliche Salze herausgelöst, was bei einer relativen Verkleinerung der Oberfläche durch größere Konglomerate oder monolithische Blöcke zu einem sehr viel niedrigeren Prozentsatz der herauslösbaren Anteile führt. Gibt man den gegossenen Blöcken einen Anstrich mit dem gleichen Dispersionsmaterial, so erniedrigt sich der lösliche Anteil bis auf 0,1% der Gesamtmasse.

Beispiel 7

Als schadstoffhaltiges Haufwerk dient ein sogenannter Stärkeschlamm, der das Abfallprodukt aus der Aufbereitung von Mais zu sogenannter modifizierter Stärke darstellt.

Mischt man 50 – 60 Teile dieses Stärkeschlamms mit ca. 40 % Trockenmasse, vorwiegend 58 Teile, mit 1 – 6 Teilen einer ca. 50%-igen wässrigen Kunststoffdispersion (wie im Beispiel 1), vorwiegend 4,5 Teile und 25 – 35 Teile Flugstaub, vorwiegend 30 Teile, sowie 5 – 15 Teile hydraulischen Binder, vorwiegend 10 Teile, so entsteht nach einer Mischzeit von 3 bis 5 Minuten ein mörtelartiger Brei, der alsbald erstarrt.

Nach drei Tagen liegt die Druckfestigkeit bei 0,6 N/qmm und 17 Tagen bei 7,0 N/qmm.

Der verfestigte und ausgehärtete Körper weist nach Elution mit destilliertem Wasser DIN 38 414 (S4) im Eluat keine Schwermetallgehalte oberhalb der für Trinkwasser zulässigen Grenzkonzentrationen auf.

In Formen gefertigt, verhalten sich ziegelsteinähnliche Gebilde wie Leichtbetonmaterial und sind somit wieder ein verwertbares Wirtschaftsgut.

Beispiel 8

Als schadstoffhaltiges Ausgangshaufwerk dient ein Lackabfallschlamm, der in der Fahrzeugherstellung beim Lackieren in Kabinen aus dem Wasserfilm anfällt, welcher den Lack von den Kabinen entfernt.

Mischt man 40 – 60 Teile Lackschlamm, vorwiegend ca. 48 – 55, mit 30 – 50 Teilen Flugstaub, vorwiegend 35 Teile und 10 – 20 Teilen Zement, vorwiegend 15 Teilen, nachdem man 2 Teile organischen Binder (wie im Beispiel 1) sofort mit dem Lackschlamm vermischt hatte, so entsteht eine dickbreiige Masse, die sich verfestigt und nach 3 Tagen 0,1 N/qmm und nach 30 Tagen 2,0 N/qmm Druckfestigkeit aufweist. Diese Masse ist auf Deponien der Klasse 3 (Hausmülldeponie) ablagerbar, weil das Eluat der ausgehärteten Masse die Forderungen der LAGA Richtlinien vom Februar 1984 erfüllt.

Beispiel 9

Als schadstoffhaltiges Ausgangshaufwerk dient ein Hydroxid- und Lackschlamm, d.h. ein Gemisch, welches neben Eisenhydroxit aus der Wasseraufbereitung auch Öl enthält und z.B. in der Fahrzeugindustrie anfällt.

Mischt man 30 – 45 Teile Hydroxidschlamm, vorwiegend 36 Teile mit 9 – 11 Teilen Lackschlamm, vorwiegend 9 Teilen, sowie mit 1 – 3 Teilen organischem Binder (wie Beispiel 1), vorwiegend 2 Teile und setzt dann 35 – 45 Teile Flugstaub, vorwiegend 38 Teile, sowie schließlich 12 – 16 Teile Zement, vorwiegend 14,5 Teile zu, so ergibt sich eine mörtelartige Mischung, die sich verfestigt. Nach 5 Tagen liegt eine Druckfestigkeit von 0,05 N/qmm und nach 21 Tagen eine solche von 0,2 N/qmm vor. Dieses Produkt kann unbedenklich betreten werden.

Die der Verfestigungsbehandlung unterworfenen Massen lassen sich wegen ihrer guten Eluateigenschaften ohne weiteres auf Deponien der Klasse 3 (Hausmülldeponien) endlagern.

Beispiel 10

Das Ausgangshaufwerk bildet ein Flugstaub aus einer Müllverbrennungsanlage mit einem wasserlöslichen Salzanteil von 6 – 8%.

Löst man unter ständigem Rühren in einer Suspension von 61,5 kg organischem Binder (wie Beispiel 1) in 415 l Wasser, 1000 kg Flugasche und mischt noch 3 Minuten, so entsteht ein breiiger, grauer Mörtel, der nach 2 Stunden erstarrt und nach 12 Tagen eine Druckfestigkeit von 0,3 N/qmm und nach 9 Tagen eine solche von 1,11 N/qmm aufweist.

Aus diesem festen Körper, der außer dem organischen Binder kein weiteres Bindemittel enthält, werden nach Einbringen in destilliertes Wasser und 24 Stunden Wartezeit weniger als 0,1% lösliche Anteile herausgelöst. Damit ist dieser Abfall auf normalen Hausmülldeponien entlagerbar, ohne daß besondere Aufwendungen für eine Aufbereitung erforderlich werden.

**Patentansprüche**

1. Verfahren zur Beseitigung von schadstoffhaltigen Haufwerken, die unter Zusatz von Anmachwasser in eine hydraulische Masse überführt und aus dieser in erhärteten Zustand gebracht werden, indem sie gegebenenfalls nach Zerkleinerung deponiert oder weiterverwendet werden, wobei vor dem Erhärten eine wässrige Dispersion eines filmbildenden Kunststoffes in einer zur Einbindung der schädlichen Bestandteile des Ausgangshaufwerkes in den Kunststofffilm ausreichenden Menge zugesetzt und in der Masse verteilt wird, dadurch gekennzeichnet, daß zur Herstellung der hydraulischen Masse ein Ausgangshaufwerk mit latenthydraulischen Eigenschaften verwendet wird, wobei der als hydraulisches Bindemittel vorgesehene Zement zumindest teilweise durch Elektrofilterasche bzw. Flugstaub ersetzt wird.

2. Verfahren nach Anspruch 1, dadurch gekennzeichnet, daß als filmbildender Kunststoff ein Acrylester-, Styrol- oder Butadien-Copolymerisat verwendet wird.

3. Verfahren nach den Ansprüchen 1 und 2, dadurch gekennzeichnet, daß zur Beseitigung von wasserlösliche Schadstoffe enthaltenden Ausgangshaufwerken der filmbildende Kunststoff in dem Anmachwasser dispergiert und dann in die Suspension das Ausgangshaufwerk eingerieselt wird.

4. Verfahren nach einem der Ansprüche 1 bis 3, gekennzeichnet durch die Verwendung von wasserlösliche Salze enthaltenden Elektrofilteraschen oder von kalkhaltigem Stärkeschlamm.

5. Verfahren nach einem der Ansprüche 1 bis 3, gekennzeichnet durch die Zugabe von 30 bis 70 Teilen Flugstaub, vorwiegend 45 Teilen zu 40 bis 60 Teilen Venturischlamm, vorwiegend 52 Teilen und dazu von 1, 8 bis 3, 5 Teilen wässriger Kunststoffdispersion sowie durch anschließendes intensives Mischen in einem einen Wirbler und einen Kollergang aufweisenden Mischer während ca. 5 Minuten.

6. Verfahren nach einem der Ansprüche 1 bis 4, dadurch gekennzeichnet, daß 230 bis 360 Teile, vorwiegend 315 kg Öltanksedimentschlamm mit 10 bis 30 Teilen einer ca. 45–50%-igen wässrigen Kunststoffdispersion aus Styrol-Butadien-Copolymerisat, vorwiegend 15 bis 20 kg gemischt und dann 610 bis 760 Teile Flugstaub aus Steinkohlekraftwerken, vorwiegend 665 kg zugegeben und die Masse weiter ca. 4 Minuten intensiv mit einem Wirbler und Kollergang aufweisenden Mischer durchmischt wird.

7. Verfahren nach einem der Ansprüche 1 bis 4, dadurch gekennzeichnet, daß eine Altlastmasse mit kokereispezifischer Belastung im Verhältnis von 30 bis 40 Teilen, vorwiegend 35 Teilen mit 30 bis 40 Teilen Rotschlamm, vorwiegend 35 Teilen, sowie 10 bis 20 Teilen Flugstaub, vorwiegend 12 bis 15 Teilen gemischt und dem ca. 10 bis 20 Teile hydraulischer Binder, vorwiegend 15 Teile, sowie 1 bis 3 Teile vorwiegend 2 Teile, einer 50%-igen wässrigen Kunststoffdispersion aus Acrylester-Copolymerisat, angerührt in 5 bis 6 Teilen Anmachwasser zugesetzt werden, worauf ca. 3 bis 5 Minuten intensiv mit einem Wirbler und Kollergang enthaltenden Spezialmischer durchgemischt wird.

8. Verfahren nach einem der Ansprüche 1 bis 4, dadurch gekennzeichnet, daß ein Haufwerk einer Altlast mit Schmermetallverunreinigungen im Verhältnis von 65 bis 80 Teilen, vorwiegend 75 Teilen mit 2,1 bis 3,9 Teilen eines organischen Binders, vorwiegend 3,5 Teilen gelöst in 8 Teilen Anmachwasser vermischt werden und danach 4 bis 10 Teile Flugstaub, vorwiegend 6 Teile und schließlich 10 bis 20 Teile hydraulischen Binder, vorwiegend 15 Teile zugegeben werden, woraus durch Mischen in einem Wirbler und Kollergang aufweisenden Mischer während ca. 5 Minuten eine Mörtelmasse hergestellt wird.

9. Verfahren nach einem der Ansprüche 1 bis 4, dadurch gekennzeichnet, daß ein Lackabfallschlamm zu 40 bis 60 Teilen, vorwiegend 48 bis 55 Teilen, 30 bis 50 Teile Flugstaub, vorwiegend 35 Teile und 10 bis 20 Teile, vorwiegend 15 Teile, Zement, unter Zugabe von 2 Teilen organischem Binder gemischt werden.

10. Verfahren nach einem der Ansprüche 1 bis 4, dadurch gekennzeichnet, daß 30 bis 45 Teile, vorwiegend 36 Teile eines Hydroxid- und 9 bis 11 Teile, vorwiegend 9 Teile Lackschlamm und 1 bis 3 Teile, vorwiegend 2 Teile organischer Binder 35 bis 45 Teile, vorwiegend 38 Teile, Flugstaub und schließlich 12 bis 16 Teile, vorwiegend 14, 5 Teile, Zement zugemischt werden.

11. Verfahren nach einem der Ansprüche 1 bis 4, dadurch gekennzeichnet, daß man aus der angemachten hydraulischen Mischung Blöcke gießt, die nach Erhärtung mit einem Anstrich aus dem gleichen Dispersionsmaterial versehen werden, das in dem Mörtel enthalten ist.

## Claims

1. A process for eliminating harmful wastes, which are converted into a hydraulic mass by the addition of mixing water and brought from this to a hardened state, in which they are deposited or reused after size reduction if necessary, whereby an acqueous dispersion of a film-forming plastic is added before hardening in a quantity sufficient for binding the harmful components of the basic waste into the plastics film and is dispersed in the mass, characterised in that basic waste with latent hydraulic properties is used for the manufacture of the hydraulic mass, whereby the cement provided as hydraulic binding agent is replaced at least partially with electrostatic filter ash or flue dust.

2. A process according to Claim 1, characterised in that an acrylic ester, styrene or butadiene copolymerisate is used as the film-forming plastic.

3. A process according to Claims 1 and 2, characterised in that to eliminate basic wastes containing harmful water-soluble substances the film-forming plastic is dispersed in the mixing water and then the basic waste is sprinkled into the suspension.

4. A process according to one of Claims 1 to 3, characterised by the use of electrostatic filter ashes containing water-soluble salts or starch sludge containing lime.

5. A process according to one of claims 1 to 3, characterised by the addition of 30 to 70 parts flue dust, usually 45 parts, to 40 to 60 parts Venturi sludge, usually 52 parts, and the addition to this of from 1.8 to 3.5 parts of aqueous plastics dispersion, as well as by subsequent intensive mixing for approximately 5 minutes in a mixer having a centrifuge and a pan grinder.

6. A process according to one of claims 1 to 4, characterised in that 230 to 360 parts, usually 315 kg, of oil tank sediment sludge is mixed with 10 to 30 parts of an approximately 45–50% aqueous plastics dispersion made of styrene butadiene copolymerisate, usually 15 to 20 kg, and then 610 to 760 parts flue dust from pit-coal power stations, usually 665 kg, is added and the mass is further intensively mixed approximately 4 minutes using a mixer having a centrifuge and a pan grinder.

7. A process according to one of claims 1 to 4, characterised in that a scrap load mass with specific coking plant content in the proportion of 30 to 40 parts, usually 35 parts, is mixed with 30 to 40 parts red sludge, usually 35 parts, as well as 10 to 20 parts flue dust, usually 12 to 15 parts, and to this is added approximately 10 to 20 parts of hydraulic binding agent, usually 15 parts, as well as 1 to 3 parts, usually 2 parts, of a 50% aqueous plastics dispersion made of acrylic ester copolymerisate, stirred into 5 to 6 parts mixing water, whereupon it is intensively mixed for approximately 3 to 5 minutes using a special mixer having a centrifuge and a pan grinder.

8. A process according to one of claims 1 to 4, characterised in that waste from a scrap load with heavy metal contaminants in the proportion of 65 to 80 parts, usually 75 parts, is mixed with 2.1 to 3.9 parts of an organic binding agent, usually 3.5 parts, dissolved in 8 parts mixing water and subsequently 4 to 10 parts flue dust, usually 6 parts, and finally 10 to 20 parts hydraulic binding agents, usually 15 parts, are added from which a mortar mass is produced by mixing for approximately 5 minutes in a mixer having a centrifuge and pan grinder.

9. A process according to one of claims 1 to 4, characterised in that a lacquer waste sludge at 40 to 60 parts, usually 48 to 55 parts, 30 to 50 parts flue dust, usually 35 parts, and 10 to 20 parts, usually 15 parts, cement are mixed with the addition of 2 parts of organic binding agent.

10. A process according to one of claims 1 to 4, characterised in that 30 to 45 parts, usually 36 parts, of a hydroxide- and 9 to 11 parts, usually 9 parts, of lacquer sludge and 1 to 3 parts, usually 2 parts, of organic binding agent, 35 to 45 parts, usually 38 parts, flue dust and finally 12 to 16 parts, usually 4.5 parts, cement are mixed.

11. A process according to one of claims 1 to 4, characterised in that blocks are cast from the resultant hydraulic mixture which after hardening are provided with a coating of the same dispersion material as is contained in the mortar.

## Revendications

1. Procédé pour éliminer des déchets contenant des produits toxiques, qui sont transformés en une masse hydraulique par adjonction d'eau de délayage et sont passés de cet état à l'état durci, et qui peuvent être éventuellement déposés dans une décharge après broyage ou à nouveau utilisés, une dispersion aqueuse d'une matière synthétique filmogène étant ajoutée avant le durcissement selon une quantité suffisante pour incorporer les composants toxiques des déchets de départ dans le film en matière synthétique et les répartir dans la masse, caractérisé en ce que, pour réaliser la masse hydraulique, on utilise des déchets de départ présentant des propriétés hydrauliques latentes, le ciment prévu en tant que liant hydraulique étant remplacé, du moins en partie, par des cendres d'électrofiltres ou des poussières volantes.

2. Procédé selon la revendication 1, caractérisé en ce que l'on utilise en tant que matière synthétique filmogène un copolymérisat d'ester acrylique, de styrol ou de butadiène.

3. Procédé selon les revendications 1 et 2, caractérisé en ce que, pour éliminer les déchets de départ contenant des produits toxiques solubles dans l'eau, la matière synthétique filmogène est dispersée dans l'eau de délayage et les déchets de départ sont ensuite incorporés dans la suspension par ruissellement.

4. Procédé selon l'une des revendications 1 à 3, caractérisé par l'utilisation de cendres d'électrofiltres contenant des sels solubles dans l'eau, ou d'une boue d'amidon contenant de la chaux.

5. Procédé selon l'une des revendications 1 à 3, caractérisé par l'adjonction de 30 à 70 parties de poussières volantes, de préférence 45 parties, à 40 à 60 parties de boue de Venturi, de préférence 52 parties, et à cela 1,8 à 3,5 parties d'une dispersion aqueuse de matières synthétiques, ainsi que par un mélange intensif qui suit dans un mélangeur comprenant un cyclone et un broyeur à meules pendant environ 5 minutes.

6. Procédé selon l'une des revendications 1 à 4, caractérisé en ce que l'on mélange 230 à 360 parties, de préférence 315 kg d'une boue de sédiments de réservoirs à mazout à 10 à 30 parties d'une dispersion aqueuse à 45–50% de matières synthétiques d'un copolymérisat de styrol-butadiène, de préférence 15 à 20 kg, on ajoute ensuite 610 à 760 parties de poussières volantes provenant de centrales à charbon, de préférence 665 kg, et on continue à mélanger la masse pendant 4 minutes de façon intensive avec un mélangeur comprenant un cyclone et un broyeur à meules.

7. Procédé selon l'une des revendications 1 à 4, caractérisé en ce que l'on mélange une masse d'une charge ancienne à charge spécifique de cokerie selon un rapport de 30 à 40 parties, de préférence 35 parties, à 30 à 40 parties de boue rouge, de préférence 35 parties, ainsi que 10 à 20 parties de poussières volantes, de préférence 12 à 15 parties, et en ce que l'on y ajoute environ 10 à 20 parties d'un liant hydraulique, de préférence de 15 parties, ainsi que 1 à 3 parties, et de préférence 2 parties, d'une dispersion aqueuse à 50% de matière synthétique provenant d'un copolymérisat d'ester acrylique, brassées dans 5 à 6 parties d'eau de délayage, après quoi on effectue un mélange intensif pendant 3 à 5 minutes dans un mélangeur comprenant un cyclone et un broyeur à meules.

8. Procédé selon l'une des revendications 1 à 4, caractérisé en ce que l'on dissout les déchets d'une charge ancienne comprenant des impuretés en métaux lourds selon un rapport de 65 à 80 parties, de préférence 75 parties, à 2,1 à 3,9 parties d'un liant organique, de préférence 3,5 parties, dissous dans 8 parties d'eau de délayage, et ensuite on ajoute 4 à 10 parties de poussières volantes, et de préférence 6 parties, et finalement 10 à 20 parties d'un liant hydraulique, et de préférence 15 parties, après quoi on obtient une masse de genre mortier par mélange pendant environ 5 minutes dans un mélangeur comprenant un cyclone et un broyeur à meules.

9. procédé selon l'une des revendications 1 à 4, caractérisé en ce que l'on mélange 40 à 60 parties d'une boue de déchets de laque, de préférence 48 à 55 parties, 30 à 50 parties de poussières volantes, de préférence 35 parties, et 10 à 20 parties de ciment, de préférence 15 parties, par adjonction de 2 parties d'un liant organique.

10. Procédé selon l'une des revendications 1 à 4, caractérisé en ce que l'on mélange 30 à 45 parties, de préférence 36 parties, d'un hydroxyde, 9 à 11 parties, de préférence 9 parties, d'une boue de laque, et 1 à 3 parties, de préférence 2 parties, d'un liant organique, 35 à 45 parties, de préférence 38 parties, de poussières volantes, et finalement 12 à 16 parties, de préférence 14,5 parties, de ciment.

11. Procédé selon l'uns des revendications 1 à 4, caractérisé en ce que l'on coule à partir du mélange hydraulique délayé des blocs qui sont munis après durcissement d'un enduit dans le même matériau de dispersion qui est contenu dans le mortier.